Europäisches Patentamt

European Patent Office

Office européen des brevets

(11) Publication number: 0 404 547
A2

# EUROPEAN PATENT APPLICATION

(21) Application number: 90306744.5

(22) Date of filing: 20.06.90

(51) Int. Cl.5: F16C 17/14

(30) Priority: 20.06.89 ZA 894672

(43) Date of publication of application:
27.12.90 Bulletin 90/52

(84) Designated Contracting States:
AT BE CH DE ES FR GB GR IT LI LU NL SE

(71) Applicant: SINCLAIR INDUSTRIES
(PROPRIETARY) LIMITED
Dekema and Lantern Roads
Wadeville, Germiston 1401, Transvaal(ZA)

(72) Inventor: Jaschek, Reinhard Albert Reinhold
40 Hurleyvale Avenue
Hurleyvale, Edenvale 1610, Transvaal(ZA)

(74) Representative: Opperman, Stuart Richard et
al
Haseltine Lake & Co. Hazlitt House 28
Southampton Buildings Chancery Lane
London WC2A 1AT(GB)

(54) Bearings for submerged machines.

(57) A bearing for a submerged machine comprises first and second bearing elements. A first bearing element (16) is formed as an insert which fits into a shaft (12) of a turbine (10) of the machine. The second bearing element is an insert (22) which is retained within the housing of the machine. The insert (16) defines a conical recess (18), while the insert (22) defines a complemental conical projection (24). The inserts are made of plastics materials with mutually self lubricating properties. In use, centrifugal forces expel abrasive particles from the interface between the bearing surfaces of the respective inserts, increasing the service life of the bearing.

Fig 1

This invention relates to bearings for machines that operate in submerged conditions, such as suction pool cleaners.

EP 0 404 547 A2

Some types of suction pool cleaners have a turbine which is caused to rotate by water being sucked through the cleaner by the pool filtration system. That water carries dirt particles, often including fine sand and clay particles. As the bearings of the turbine are typically open to the water flow, as shown for example in US patent no. 4 521 933, these abrasive particles enter the bearings of the turbine. This applies whether the bearings are ball bearings or simply conventional bushes in which the turbine shaft rotates.

According to the invention a bearing for a submerged machine comprises first and second interengaging relatively rotating bearing elements, the first element defining a conical projection and the second element defining a complemental conical recess.

The result is that the bearing surfaces are conical and that due to the effects of centrifugal force, particles that penetrate into the interface between those surfaces are thrown back and cannot lodge in the interface to cause wear.

For example, in the case of the above discussed turbine, the turbine shaft could carry conical recesses and the bearing blocks could carry complemental conical projections which engage with the recesses.

## BRIEF DESCRIPTION OF THE DRAWINGS

Figure 1 is a partial sectional view of a turbine including bearings according to the invention; and

Figure 2 is an exploded view of the turbine of Figure 1, showing the various components.

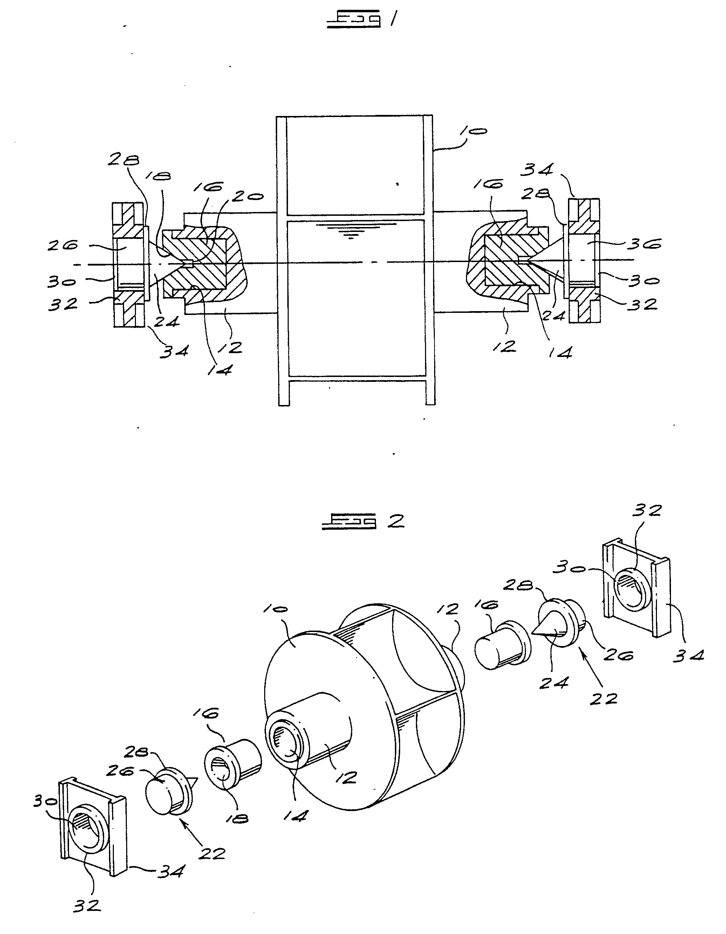

The drawings illustrate a turbine 10 for a submerged suction cleaning device of the kind described in US patent no. 4 521 933, the disclosure of which is corporated herein by reference. The turbine is moulded from plastics and has stub shafts 12 extending from either side of the body of the turbine. The stub shafts 12 are formed with coaxial blind bores 14 in their outermost ends, which are sized to receive first bearing elements in the form of cylindrical bearing inserts 16. The inserts 16 are typically moulded from polyurethane plastics, for example, a 50/50 mix of Desmopan (trademark) grades 385 and 359. Each insert 16 defines an inwardly tapering conical bearing surface 18, with a narrow blind bore 20 extending into the insert from the apex of the conical surface 18. The inserts 16 are a snug fit in the bores 14 of the turbine shafts 12, and rotate coaxially with the shafts.

A pair of second bearing elements 22 are provided, each of which has a conical projection 24 which is shaped complementally to the conical recess 18. The rear portion 26 of the bearing element 22 is cylindrical, and a radially outwardly extending locating flange 28 separates the conical and cylindrical portions of the element. The bearing element 22 is typically moulded from an ultra high molecular weight polyethylene plastics material, such as Safripol (trademark) UHM polyethylene, grade GUR 812.

The cylindrical portion 26 of the bearing element 22 is sized to fit into an aperture 30 defined by a central boss 32 of a bearing support element 34. The bearing support element is moulded from tough plastics material and is shaped to be retained by slots in the inner walls of a pool cleaner housing (not shown). The cylindrical portion 26 of the bearing element 22 is a snug fit in the aperture 30.

When the turbine rotates, the bearing inserts 16 rotate with the turbine stub shafts 12 relative to the bearing elements 22, with the conical bearing surfaces 18 engaging the conical projections 24 of the bearing elements 22. The characteristics of the materials from which the inserts 16 and the bearing elements 22 are formed provide a self-lubricating effect. In addition, when the turbine is operating, water flowing through the pool cleaner lubricates and cools the bearing surfaces. Dirt particles which may be carried to the interface between the bearing elements are expelled due to centrifugal action, which causes the particles, during rotation of the turbine, to move to a position in the interface having the widest diameter, from which position they are then expelled. Thus, the life of the bearings is extended. The bores 20 formed in the bearing inserts 16 accommodate particles which may be forced past the interface, preventing them from damaging the bearing surfaces.

## Claims

1. A bearing for a submerged machine comprising first and second interengaging relatively rotating bearing elements (22, 16), the first element (22) defining a conical projection (24) and the second element (16) defining a complemental conical recess (18).

2. A bearing according to claim 1 wherein at least one of the bearing elements (22, 16) is formed as an insert (16) adapted to be fitted into an aperture (14) in a rotating shaft (12), coaxially with the axis of rotation of the shaft.

3. A bearing according to claim 2 wherein the shaft (12) is a shaft of a turbine (10) of the submerged machine.

4. A bearing according to any one of claims 1 to 3 wherein at least one of the bearing elements (22,16) is formed as an insert (22) adapted to be retained within a housing of the submerged machine.

5. A bearing according to any one of claims 1 to 4 wherein the second bearing element (16) defines a bore (20) extending inwardly into the body of the insert from the apex of the conical recess (18).

6. A bearing according to any one of claims 1 to 5 wherein the bearing elements (22, 16) are formed from plastics materials having mutually self-lubricating properties.

7. A bearing according to claim 6 wherein one bearing element (16) comprises polyurethane and the other (22) comprises a high molecular weight polyethylene.

8. A turbine assembly including a bearing according to any one of claims 1 to 7.

Fig 1

Fig 2